# EUROPEAN PATENT SPECIFICATION

(11) **EP 4 134 246 B1**
(45) Date of publication and mention of the grant of the patent: **26.02.2025**
(21) Application number: 22186853.2
(22) Date of filing: 26.07.2022
(51) Int. Cl.: B60C 7/10, B60C 7/24

(54) **SOLID TIRE**
VOLLREIFEN
PNEU SOLIDE

(30) Priority: 10.08.2021 JP 2021130866
(43) Date of publication of application: 15.02.2023
(73) Proprietor: Sumitomo Rubber Industries, Ltd., Kobe-shi, Hyogo-ken 651-0072 (JP)
(72) Inventor: KOBAYASHI, SHIGEYUKI, Kobe-shi, Hyogo 651-0072 (JP)
(74) Representative: Manitz Finsterwald Patent- und Rechtsanwaltspartnerschaft mbB

(56) References cited:
- DE-A1- 102007 055 036
- JP-A- 2003 320 807
- JP-A- 2020 011 636
- JP-A- 2021 079 914
- JP-A- 2021 091 368
- JP-U- S57 194 806

## Description

### BACKGROUND OF THE INVENTION

### Field of the Invention

The present invention relates to a solid tire.

### Background Art

Japanese Laid-Open Patent Publication No. 2003-320807 discloses a vehicle wheel that includes a solid tire base body and a rim on which the tire base body is mounted. The tire base body has a base rubber layer disposed on a rim side. The base rubber layer has a protrusion that engages with a recess of the rim. The base rubber layer is formed of a rubber composition containing vinylon fibers. Further prior art solid tires are disclosed in the following documents JP 2021 091368 A, DE 10 2007 055036 A1, JP 2020 011636 A, JP 2003 320807 A, JP 2021 079914 A and JP S57194806U. In particular, JP 2021 091368 A discloses a solid tire to be mounted on a side ringless type rim, and includes a base rubber layer for being assembled on the rim, and the base rubber layer is on one side in the tire axial direction. The first side is provided with a protrusion for projecting from the bottom surface of the tire and being fitted into the recessed portion of the rim, and the protrusion is an outer rubber portion arranged on the outer surface side of the protrusion and the outer side. It includes an inner rubber portion arranged inside the rubber portion and having different rubber physical properties from the outer rubber portion. Further, DE 10 2007 055036 A1 discloses a solid rubber tire, at least consisting of a base profile which has a plurality of tensile strength members arranged in the circumferential direction of the tire, of a damper layer which is arranged radially above the base profile and of a tread part which forms the outer circumference of the tire, characterized in that hollow bodies, preferably hollow spheres, are arranged in the damper layer, which are completely enclosed by the rubber material of the damper layer and firmly connected to it.

A mold for vulcanizing and molding the tire base body has a recess for forming the protrusion. The rubber composition which has been subjected to heat and pressure and plasticized is filled in the recess when vulcanized and molded. Thus, the protrusion is vulcanized and molded.

However, fluidity of the rubber composition containing the vinylon fibers as described above tends to be lowered in vulcanization molding, and the rubber composition does not sufficiently flow into the recess, so that molding defect of the protrusion is likely to occur.

The present invention has been made in view of the aforementioned circumstances, and a main object of the present invention is to provide a solid tire capable of maintaining tire stiffness while molding defect of a protrusion disposed in a base rubber layer is prevented.

### SUMMARY OF THE INVENTION

The present invention is directed to a solid tire. The solid tire includes: a base rubber layer configured to be mounted on a sideringless rim being structured to include a rim seat and a flange portion, wherein the rim seat is structured to include a recess and a seat portion; and a tread rubber layer disposed outward of the base rubber layer in a tire radial direction. A protrusion is disposed on an inner circumferential surface, in the tire radial direction, of the base rubber layer so as to protrude inwardly in the tire radial direction on one side in a tire axial direction. The base rubber layer includes a base inner circumferential layer forming the inner circumferential surface side portion including the protrusion and a contact portion, and a base outer circumferential layer disposed outward of the base inner circumferential layer in the tire radial direction. The base inner circumferential layer is formed of a first rubber material in which no fibers are blended. The base outer circumferential layer is formed of a second rubber material in which one or more fibers are blended. The fiber has a diameter and a length, wherein the fiber diameter is not greater than 100 µm, and the fiber length is not greater than 10 mm. The inner circumferential surface, in the tire radial direction, of the solid tire is disposed on the rim seat when the solid tire is mounted on the rim, and wherein the contact portion is disposed on the other side in the tire axial direction relative to the protrusion and further comes into contact with the outer surface, in the tire radial direction, of the seat portion when mounted on the rim.

The solid tire of the present invention has the above-described structure, and can thus maintain tire stiffness while molding defect of the protrusion disposed in the base rubber layer is prevented.

### BRIEF DESCRIPTION OF THE DRAWINGS

FIG. 1 is a cross-sectional view of a solid tire of the present embodiment; and
FIG. 2 is a cross-sectional view of a green tire and a vulcanization mold according to the present embodiment.

### DETAILED DESCRIPTION

An embodiment of the present invention will be described below with reference to the drawings. It is to be understood that the drawings include exaggerated expressions and the dimensional ratio in the drawings is expressed so as to be different from that of the actual structure in order to aid in understanding of the present invention. The same or common components are denoted by the same reference characters throughout embodiments, and repeated description is omitted. Furthermore, the embodiments and specific structures in the drawings are for aiding in understanding of the present invention, and the present invention is not limited to the illustrated specific structure.

### [Wheel]

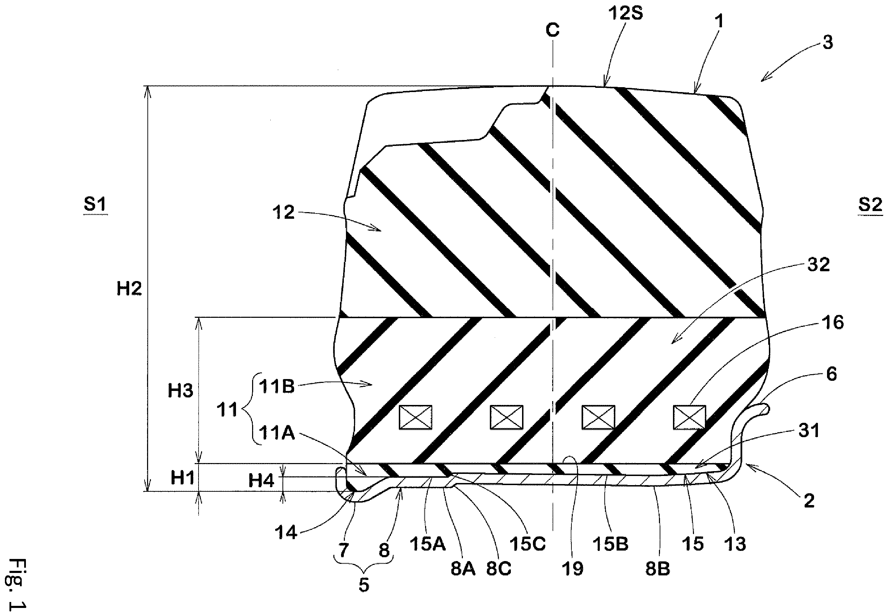

FIG. 1 is a cross-sectional view of a solid tire 1 of the present embodiment. The solid tire 1 of the present embodiment is mounted on a sideringless rim 2. Thus, a wheel 3 is structured to include the solid tire 1 and the sideringless rim 2. The solid tire 1 (wheel 3) having such a structure is preferably used for, for example, industrial vehicles such as forklifts.

### [Sideringless rim]

The sideringless rim (hereinafter, may be simply referred to as "rim") 2 of the present embodiment is structured to include a rim seat 5 and a flange portion 6 as in a conventional rim.

In the present embodiment, an inner circumferential surface 13, in the tire radial direction, of the solid tire 1 is disposed on the rim seat 5 when the solid tire 1 is mounted on the rim 2. In the present embodiment, the rim seat 5 is structured to include a recess 7 and a seat portion 8.

In the present embodiment, the recess 7 is recessed inwardly in the tire radial direction on one side S1, in the tire axial direction, of the rim seat 5 (rim 2). The recess 7 having such a structure can prevent removal of the solid tire 1 (fix the solid tire 1) since a protrusion 14 of the solid tire 1 fits into the recess 7 when the solid tire 1 is mounted on the rim 2.

In the present embodiment, the seat portion 8 is disposed on the other side S2 in the tire axial direction relative to the recess 7. In the present embodiment, the seat portion 8 is structured to include a first seat portion 8A, and a second seat portion 8B disposed on the other side S2 in the tire axial direction relative to the first seat portion 8A. The seat portion 8 may be formed of one of the first seat portion 8A or the second seat portion 8B, or may additionally include another seat portion.

In the present embodiment, the first seat portion 8A is recessed inwardly in the tire radial direction (has the outer diameter set to be smaller) as compared with the second seat portion 8B. The first seat portion 8A and the second seat portion 8B are connected to each other via a stepped portion 8C.

In the present embodiment, the flange portion 6 is disposed on the other side S2 in the tire axial direction relative to the rim seat 5 (second seat portion 8B), and protrudes outwardly from the rim seat 5 in the tire radial direction. The flange portion 6 having such a structure supports the side surface of the solid tire 1 on the other side S2 in the tire axial direction when the solid tire 1 is mounted on the rim 2.

### [Solid tire]

The solid tire 1 of the present embodiment is structured to include a base rubber layer 11 and a tread rubber layer 12.

### [Base rubber layer]

The base rubber layer 11 is mounted on the rim 2. In the present embodiment, the inner circumferential surface 13, in the tire radial direction, of the base rubber layer 11 is disposed on the rim seat 5 when mounted on the rim 2. In the present embodiment, the inner circumferential surface 13 has the protrusion 14 and a contact portion 15.

In the present embodiment, the protrusion 14 protrudes inwardly in the tire radial direction on the one side S1 in the tire axial direction. The protrusion 14 fits into the recess 7 when mounted on the rim 2. Thus, the solid tire 1 (base rubber layer 11) is fixed to (prevented from being removed from) the rim 2. In order to stably mount the solid tire 1 on the rim 2, the maximum height H4, in the tire radial direction, of the protrusion 14 is set to be, for example, 1.5% to 2.8% of the maximum tire cross-sectional height H2 in the tire radial direction. In the description herein, dimensions and the like of the components of the solid tire 1 represent values measured in a state where the solid tire 1 has not been mounted on the rim 2 yet.

In the present embodiment, the contact portion 15 is disposed on the other side S2 in the tire axial direction relative to the protrusion 14. In the present embodiment, the contact portion 15 comes into contact with the outer surface, in the tire radial direction, of the seat portion 8 when mounted on the rim 2.

In the present embodiment, the contact portion 15 is structured to include a first contact portion 15A, and a second contact portion 15B disposed on the other side S2 in the tire axial direction relative to the first contact portion 15A. The contact portion 15 may be composed of one of the first contact portion 15A or the second contact portion 15B, or may additionally include another contact portion.

In the present embodiment, the second contact portion 15B is recessed outwardly in the tire radial direction (has the inner diameter set to be greater) as compared with the first contact portion 15A. The first contact portion 15A and the second contact portion 15B are connected to each other via a stepped portion 15C. In the present embodiment, the first contact portion 15A comes into contact with the first seat portion 8A of the rim 2. The second contact portion 15B comes into contact with the second seat portion 8B of the rim 2.

In the present embodiment, the base rubber layer 11 has a plurality of (four in the present embodiment) tensile bodies 16 embedded therein. Each of the tensile bodies 16 is preferably formed in an annular shape that extends continuously in the tire circumferential direction. The tensile bodies 16 having such a structure exhibit a binding effect and can thus enhance stability of the solid tire 1 mounted on the rim 2.

In the present embodiment, the base rubber layer 11 is structured to include a base inner circumferential layer 11A that forms the inner circumferential surface 13 side portion including the protrusion 14, and a base outer circumferential layer 11B disposed outward of the base inner circumferential layer 11A in the tire radial direction. The base inner circumferential layer 11A and the base outer circumferential layer 11B will be described below in detail.

### [Tread rubber layer]

The tread rubber layer 12 has a tread surface 12S for coming into contact with a road surface. In the present embodiment, the profile of the tread surface 12S has a symmetrical shape having the tire equator C at the center thereof, and is formed in an arc-like shape projecting outwardly in the tire radial direction.

### [Mounting of solid tire]

In the present embodiment, firstly, the solid tire 1 is inserted in the rim 2 from the one side S1 (recess 7 side) toward the other side S2 in the tire axial direction, and the protrusion 14 of the solid tire 1 fits into the recess 7 of the rim 2. Thus, the solid tire 1 is mounted on the rim 2. In the present embodiment, as described above, a side ring (not shown) need not be used for the solid tire 1, so that the solid tie 1 is easily mounted on the rim 2.

In the present embodiment, in the solid tire 1, the second contact portion 15B is recessed outwardly in the tire radial direction (has the inner diameter set to be greater) as compared with the first contact portion 15A. Meanwhile, in the rim 2 of the present embodiment, the first seat portion 8A is recessed inwardly in the tire radial direction (has the outer diameter set to be smaller) as compared with the second seat portion 8B. Thus, in the present embodiment, when the solid tire 1 is inserted in the rim 2 from the one side S1 (recess 7 side) toward the other side S2 in the tire axial direction, contact pressure between the second contact portion 15B and the first seat portion 8A can be lowered. Therefore, in the present embodiment, the solid tire 1 can be easily mounted on the rim 2.

### [Vulcanization molding of solid tire]

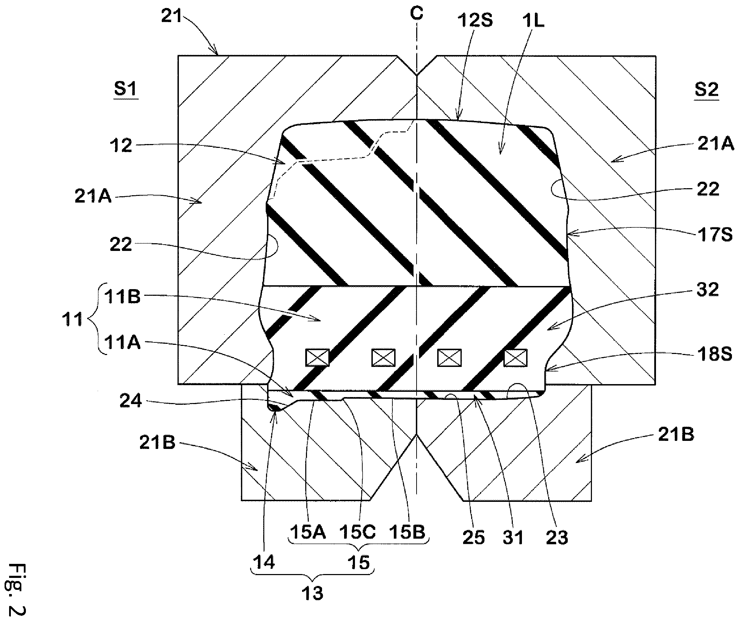

In the present embodiment, the solid tire 1 is produced by vulcanizing and molding an unvulcanized green tire 1L as in conventional art. Unvulcanized means all the states before a completely vulcanized state, and a so-called semi-vulcanized state is included in the "unvulcanized" state. A vulcanization mold is used for the vulcanization molding. FIG. 2 is a cross-sectional view of the green tire 1L and a vulcanization mold 21 according to the present embodiment.

The vulcanization mold 21 is structured to include a pair of first molds 21A, 21A and a pair of second molds 21B, 21B. The first molds 21A, 21A and the second molds 21B, 21B are configured to be openable and closable.

In the present embodiment, the pair of first molds 21A, 21A form a first molding surface 22 for molding a tread surface 12S, sidewall side surfaces 17S, and a part of bead side surfaces 18S in the solid tire 1. In the present embodiment, the pair of second molds 21B, 21B form a second molding surface 23 for molding a part of the bead side surfaces 18S and the inner circumferential surface 13 in the solid tire 1. Among the pair of second molds 21B, 21B, the second mold 21B disposed on the one side S1 in the tire axial direction has a recess 24 for molding the protrusion 14 of the solid tire 1.

In the vulcanization mold 21, the pair of first molds 21A, 21A and the pair of second molds 21B, 21B are closed to form a cavity 25 defined by the molding surface (first molding surface 22 and second molding surface 23) formed over the molds 21A, 21B.

In the vulcanizing and molding process step, the green tire 1L is put in the vulcanization mold 21 in which the pair of first molds 21A, 21A and the pair of second molds 21B, 21B are opened. Subsequently, the pair of first molds 21A, 21A and the pair of second molds 21B, 21B are closed. A rubber material of the green tire 1L is subjected to heat and pressure and plasticized, and the green tire 1L is vulcanized and molded in the cavity 25. The plasticized rubber material of the green tire 1L is filled in the recess 24 of the second mold 21B. Thus, the solid tire 1 (shown in FIG. 1) having the protrusion 14 is produced.

If fluidity of the rubber material of the base rubber layer 11 is lowered in the vulcanization molding, the plasticized rubber material does not sufficiently flow into the recess 24, so that molding defect of the protrusion 14 is likely to occur. Meanwhile, in a case where a rubber material having high fluidity is merely used, stiffness required for the solid tire 1 is unlikely to be assured.

In the present embodiment, the base inner circumferential layer 11A and the base outer circumferential layer 11B are formed of a first rubber material 31 and a second rubber material 32 described below, whereby tire stiffness is maintained while molding defect of the protrusion 14 is prevented.

### [Base inner circumferential layer]

The base inner circumferential layer 11A is formed of the first rubber material 31 in which no fibers are blended. In the present embodiment, the fiber is for reinforcing the rubber material. Although such a fiber can reinforce the rubber material, the fiber tends to lower fluidity of the rubber material in the vulcanization-molding shown in FIG. 2. The fiber will be described below in detail.

In the present embodiment, the base rubber layer 11 that forms the inner circumferential surface 13 side portion including the protrusion 14 is formed of the first rubber material 31 in which no fibers are blended. Therefore, in the vulcanization-molding shown in FIG. 2, fluidity of the plasticized first rubber material 31 can be enhanced. Therefore, in the present embodiment, the first rubber material 31 can be sufficiently spread in the cavity 25 of the vulcanization mold 21, so that molding defect of the protrusion 14 can be prevented. Furthermore, in the present embodiment, the enhancement of fluidity of the first rubber material 31 can prevent molding defect of the first contact portion 15A and the second contact portion 15B connected to each other via the stepped portion 15C.

### [Base outer circumferential layer]

The base outer circumferential layer 11B is formed of the second rubber material 32 in which one or more fibers are blended.

Any fiber capable of reinforcing the rubber material is adopted as appropriate. In the present embodiment, as the fiber, for example, organic fibers (the examples of which include polyester fibers, nylon fibers, rayon fibers, polyethylene naphthalate fibers, and aramid fibers) are adopted. Among these fibers, one of the fibers may be blended in the second rubber material 32 or a plurality of kinds of the fibers may be blended in the second rubber material 32. The blended components of the second rubber material 32 may be the same as the blended components of the first rubber material 31 except for the blended fibers, or the blended components may be different between the second rubber material 32 and the first rubber material 31. The components to be blended in the first rubber material 31 and the second rubber material 32 are determined as appropriate based on blended components in a rubber material used for a conventional base rubber layer.

A fiber length and a fiber diameter can be determined as appropriate. In the present embodiment, the fiber length is not greater than 10 mm and more preferably not greater than 5 mm in consideration of fluidity of the second rubber material 32 in the vulcanization molding. Similarly, the fiber diameter is not greater than 100 µm and more preferably not greater than 50 µm.

In the solid tire 1 of the present embodiment, the base outer circumferential layer 11B disposed outward of the base inner circumferential layer 11A in the tire radial direction is formed of the second rubber material 32 in which the fibers are blended, and thus has high stiffness by a rubber reinforcing effect exhibited by the fibers. Since the base outer circumferential layer 11B does not have a member such as the protrusion 14 having a complicated shape, even when the base outer circumferential layer 11B is formed of the second rubber material 32 having lower fluidity as compared with the first rubber material 31, molding defect does not occur in the vulcanization-molding shown in FIG. 2.

Thus, in the solid tire 1 of the present embodiment, the base rubber layer 11 includes the base inner circumferential layer 11A formed of the first rubber material 31 and the base outer circumferential layer 11B formed of the second rubber material 32, and can thus maintain tire stiffness while preventing molding defect of the protrusion 14.

In order to effectively exhibit the above-described effect, a rubber hardness of the first rubber material 31 is preferably set to be 70 to 95 degrees. In a case where the rubber hardness is set to be not less than 70 degrees, stiffness of the base inner circumferential layer 11A including the protrusion 14 can be maintained and fixability to the rim (prevention of removal from the rim) can be enhanced after the vulcanization molding while fluidity of the first rubber material 31 is enhanced. Meanwhile, in a case where the rubber hardness is set to be not greater than 95 degrees, stiffness of the protrusion 14 can be prevented from becoming higher than required, so that, for example, damage (breakage) to the protrusion 14 can be prevented when the protrusion 14 is mounted on the rim 2. From these viewpoints, the rubber hardness is more preferably not less than 75 degrees and preferably not greater than 90 degrees.

In the description herein, the "rubber hardness" represents type A durometer hardness that is measured at a standard temperature of 23°C±2°C by a type A durometer in accordance with JIS-K6253.

As shown in FIG. 1, the maximum height H1, in the tire radial direction, of the base inner circumferential layer 11A is preferably set to be 3% to 20% of the maximum tire cross-sectional height H2 in the tire radial direction. In a case where the maximum height H1 is set to be not less than 3% of the maximum tire cross-sectional height H2, an interface 19 between the base inner circumferential layer 11A and the base outer circumferential layer 11B can be prevented from being formed at the protrusion 14. Thus, when, for example, the solid tire 1 is mounted on the rim 2, damage (for example, separation of the protrusion 14) at the interface 19 can be prevented. Meanwhile, in a case where the maximum height H1 is set to be not greater than 20% of the maximum tire cross-sectional height H2, reduction of a proportion of the base outer circumferential layer 11B can be prevented, so that tire stiffness can be maintained. From these viewpoints, the maximum height H1 is preferably not less than 5% of the maximum tire cross-sectional height H2 and preferably not greater than 18% thereof.

The specific gravity of the second rubber material 32 is preferably set to be 1.15 to 1.30. In a case where the specific gravity is set to be not less than 1.15, the base outer circumferential layer 11B can have a high stiffness by the reinforcing effect exhibited by the fibers, and steering stability can be enhanced. Meanwhile, in a case where the specific gravity is set to be not greater than 1.30, reduction of extensibility of the second rubber material 32 (base outer circumferential layer 11B) can be prevented, and durability of the solid tire 1 can be maintained. From these viewpoints, the specific gravity is preferably not less than 1.20 and preferably not greater than 1.25. In the present embodiment, the second rubber material 32 in which no fibers are blended has a specific gravity of not greater than 1.14.

The maximum height H3, in the tire radial direction, of the base outer circumferential layer 11B is preferably set to be 15% to 80% of the maximum tire cross-sectional height H2 in the tire radial direction. In a case where the maximum height H3 is set to be not less than 15% of the maximum tire cross-sectional height H2, since the proportion of the base outer circumferential layer 11B having high stiffness can be increased, tire stiffness can be maintained, so that steering stability can be enhanced. Meanwhile, in a case where the maximum height H3 is set to be not greater than 80% of the maximum tire cross-sectional height H2, reduction of a proportion (height in the tire radial direction) of the tread rubber layer 12 can be inhibited, and shortening of tire wear life and reduction of durability can be prevented. From these viewpoints, the maximum height H3 is preferably not less than 35% of the maximum tire cross-sectional height H2 and preferably not greater than 60% thereof.

Although the particularly preferred embodiment of the present invention has been described above in detail, the present invention is not limited to the illustrated embodiment.

### Examples

### [Example A]

A solid tire shown in FIG. 1 was produced as a test tire based on specifications described below (Example 1). In Example 1, the base rubber layer was structured to include a base inner circumferential layer formed of a first rubber material in which no fibers were blended, and a base outer circumferential layer formed of a second rubber material in which fibers were blended. For comparison, a solid tire including a base rubber layer that was merely formed of a rubber material in which fiber materials were blended as in the tire base body disclosed in Japanese Laid-Open Patent Publication No. 2003-320807 was produced as a test tire (Comparative example). For each test tire, presence or absence of molding defect of the protrusion, and tire stiffness (steering stability and durability) were evaluated. Common specifications and test methods were as follows. Table 1 indicates the test results.
Tire size: 18×7-8/4.33
Rim size: 8×4.33R
Maximum tire cross-sectional height H2: 132 mm
Maximum height H4 of protrusion/H2: 2.8%

### Example 1:

Base inner circumferential layer:
   Maximum height H1/H2: 5%
   Rubber hardness of first rubber: 80 degrees
Base outer circumferential layer:
   Maximum height H3/H2: 35%
   Second rubber:
      Specific gravity: 1.20
      Fiber: polyester fiber

### Comparative example:

Base rubber layer:
Maximum height (H1+H3)/H2: 40%

### <Presence or absence of molding defect of protrusion>

100 test tires were produced for each of Example 1 and Comparative example. After vulcanization molding, presence or absence of molding defect of the protrusion was visually checked.

### <Steering stability>

Each test tire was mounted on the above-described rim, and the test tires were mounted to all wheels of a vehicle (2.5-ton counterweight-type forklift), and cargo-handling for a load of around 2.0 tons was performed. A driver made sensory evaluation for steering stability during the cargo-handling. The evaluation is indicated as an index with the index of Example 1 being 100. The greater the value is, the more excellent steering stability is. When the evaluation indicated a value of not less than 90, steering stability was obtained as desired and tire stiffness was maintained.

### <Durability>

After the above-described cargo-handling was performed for 1000 hours, a state of occurrence of damage to the solid tire was visually checked. The evaluation is indicated as an index with the index of Example 1 being 100. The greater the value is, the less occurrence of the damage is and the more excellent durability is. When the evaluation indicated a value of not less than 90, durability was obtained as desired and tire stiffness was maintained.

**[Table 1]**

| | Comparative example | Example 1 |
|---|---|---|
| Presence or absence of molding defect of protrusion | Present | Absent |
| Steering stability (index) | 100 | 100 |
| Durability (index) | 98 | 100 |

According to the test results, it was confirmed that tire stiffness was maintained while molding defect of the protrusion was prevented in the solid tire of Example 1 as compared with the solid tire of Comparative example.

### [Example B]

Solid tires were produced as sample tires based on specifications in Table 2 such that the rubber hardness of the first rubber material and the maximum height H1 of the base inner circumferential layer were different among the examples (Examples 1 to 9). For each test tire, presence or absence of molding defect of the protrusion and tire stiffness (steering stability and durability) were evaluated. Furthermore, for each test tire, fixability to the rim and resistance to damage to the protrusion at the time of mounting the test tire on the rim were evaluated. The specifications were common to those for Example 1 (described in Example A) except for the specifications indicated in Table 2. Presence or absence of molding defect of the protrusion and tire stiffness (steering stability and durability) were tested as described in Example A.

### <Fixability to rim>

Stress required for removing each test tire from the rim after the test tire was mounted on the rim, was measured. The evaluation is indicated as an index with the index of Example 1 being 100. The greater the value is, the more excellent fixability to the rim is. When the evaluation indicated a value of not less than 90, fixability to the rim was obtained as desired and tire stiffness was maintained.

### <Resistance to damage to protrusion>

100 test tires were produced for each example. After vulcanization molding, a state of occurrence of damage to the protrusion was visually checked after the test tire was mounted on the rim. The evaluation is indicated as an index with the index of Example 1 being 100. The greater the value is, the less occurrence of the damage is and the more excellent durability is. When the evaluation indicated a value of not less than 90, durability was obtained as desired.

**[Table 2]**

| | Example 2 | Example 3 | Example 1 | Example 4 | Example 5 | Example 6 | Example 7 | Example 8 | Example 9 |
|---|---|---|---|---|---|---|---|---|---|
| Rubber hardness (degree) of first rubber material | 65 | 70 | 80 | 95 | 100 | 80 | 80 | 80 | 80 |
| Maximum height H1 of base inner circumferential layer/maximum tire cross-sectional height H2 (%) | 5 | 5 | 5 | 5 | 5 | 2 | 3 | 20 | 23 |
| Presence or absence of molding defect of protrusion | absent | absent | absent | absent | absent | absent | absent | absent | absent |
| Steering stability (index) | 98 | 99 | 100 | 101 | 102 | 103 | 101 | 96 | 92 |
| Durability (index) | 96 | 98 | 100 | 101 | 103 | 104 | 101 | 97 | 93 |
| Fixability to rim (index) | 91 | 98 | 100 | 103 | 106 | 102 | 102 | 99 | 97 |
| Resistance to damage to protrusion (index) | 102 | 101 | 100 | 98 | 91 | 90 | 97 | 100 | 100 |

According to the test results, it was confirmed that, in the solid tires of Examples 1 to 9, tire stiffness (steering stability and durability) was maintained while molding defect of the protrusion was prevented. Furthermore, damage to the protrusion at the time of mounting the test tire on the rim was reduced while steering stability, durability, and fixability to the rim were enhanced in Example 1, Example 3, Example 4, Example 7, and Example 8 in which rubber hardness of the first rubber material and the maximum height H1 of the base inner circumferential layer were in preferable ranges as compared with the other examples.

### [Example C]

Solid tires were produced as sample tires based on specifications in Table 3 such that the specific gravity of the second rubber material and the maximum height H3 of the base outer circumferential layer were different among the examples (Example 1, and Examples 10 to 17). For each test tire, presence or absence of molding defect of the protrusion, tire stiffness (steering stability and durability), fixability to the rim, and resistance to damage to the protrusion at the time of mounting the test tire on the rim, were evaluated. The specifications were common to those for Example 1 (described in Example A) except for the specifications indicated in Table 3. The test methods were as described in Example A and Example B.

**[Table 3]**

| | Example 10 | Example 11 | Example 1 | Example 12 | Example 13 | Example 14 | Example 15 | Example 16 | Example 17 |
|---|---|---|---|---|---|---|---|---|---|
| Specific gravity of second rubber material | 1.14 | 1.15 | 1.20 | 1.30 | 1.35 | 1.20 | 1.20 | 1.20 | 1.20 |
| Maximum height H3 of base outer circumferential layer/ maximum tire cross-sectional height H2 (%) | 35 | 35 | 35 | 35 | 35 | 10 | 15 | 80 | 85 |
| Presence or absence of molding defect of protrusion | absent | absent | absent | absent | absent | absent | absent | absent | absent |
| Steering stability (index) | 94 | 99 | 100 | 101 | 104 | 93 | 97 | 101 | 103 |
| Durability (index) | 102 | 101 | 100 | 98 | 95 | 97 | 98 | 98 | 93 |
| Fixability to rim (index) | 100 | 100 | 100 | 100 | 100 | 100 | 100 | 100 | 100 |
| Resistance to damage to protrusion (index) | 100 | 100 | 100 | 100 | 100 | 100 | 100 | 100 | 100 |

According to the test results, it was confirmed that tire stiffness (steering stability and durability) was maintained while molding defect of the protrusion was prevented in the solid tires of Example 1 and Examples 10 to 17. Furthermore, steering stability and durability were enhanced in Example 1, Example 11, Example 12, Example 15, and Example 16 in which the specific gravity of the second rubber material and the maximum height H3 of the base outer circumferential layer were in preferable ranges as compared with the other examples.

## Claims

1. A solid tire (1) comprising:
a base rubber layer (11) configured to be mounted on a sideringless rim (2) being structured to include a rim seat (5) and a flange portion (6), wherein the rim seat (5) is structured to include a recess (7) and a seat portion (8); and
a tread rubber layer (12) disposed outward of the base rubber layer (11) in a tire radial direction, wherein
a protrusion (14) is disposed on an inner circumferential surface (13), in the tire radial direction, of the base rubber layer (11) so as to protrude inwardly in the tire radial direction on one side (S1) in a tire axial direction,
the base rubber layer (11) includes a base inner circumferential layer (11A) forming the inner circumferential surface (13) side portion including the protrusion (14) and a contact portion (15), and a base outer circumferential layer (11B) disposed outward of the base inner circumferential layer (11A) in the tire radial direction,
the base inner circumferential layer (11A) is formed of a first rubber material (31) in which no fibers are blended,
the base outer circumferential layer (11B) is formed of a second rubber material (32) in which one or more fibers are blended,
wherein the fiber has a diameter and a length, wherein the fiber length is not greater than 10 mm,
wherein the inner circumferential surface (13), in the tire radial direction, of the solid tire (1) is disposed on the rim seat (5) when the solid tire is mounted on the rim (2), **characterized in that**
the fiber diameter is not greater than 100 µm and
wherein the contact portion (15) is disposed on the other side (S2) in the tire axial direction relative to the protrusion (14) and further comes into contact with the outer surface, in the tire radial direction, of the seat portion (8) when mounted on the rim (2).

2. The solid tire (1) according to claim 1, wherein a rubber hardness of the first rubber material (31) is 70 to 95 degrees, wherein the rubber hardness is a durometer hardness that is measured at a standard temperature of 23°C±2°C by a type A durometer in accordance with JIS-K6253.

3. The solid tire (1) according to claim 1 or 2, wherein a maximum height (H1), in the tire radial direction, of the base inner circumferential layer (11A) is 3% to 20% of a maximum tire cross-sectional height (H2) in the tire radial direction.

4. The solid tire (1) according to any one of claims 1 to 3, wherein a specific gravity of the second rubber material (32) is 1.15 to 1.30.

5. The solid tire (1) according to any one of claims 1 to 4, wherein a maximum height (H3), in the tire radial direction, of the base outer circumferential layer (11B) is 15% to 80% of the maximum tire cross-sectional height (H2) in the tire radial direction.

## Patentansprüche

1. Vollreifen (1), umfassend:
eine Basisgummischicht (11) zum Aufziehen auf eine seitenringlose Felge (2) konfiguriert ist, die so strukturiert ist, dass sie einen Felgensitz (5) und einen Hornabschnitt (6) umfasst, wobei der Felgensitz (5) so strukturiert ist, dass er eine Ausnehmung (7) und einen Sitzabschnitt (8) umfasst, und
eine Laufflächengummischicht (12), die in einer Reifenradialrichtung außen von der Basisgummischicht (11) angeordnet ist, wobei
ein Vorsprung (14) in der Reifenradialrichtung an einer Innenumfangsfläche (13) der Basisgummischicht (11) so angeordnet ist, dass er in der Reifenradialrichtung auf einer Seite (S1) in einer Reifenaxialrichtung nach innen vorsteht,
die Basisgummischicht (11) eine Basisinnenumfangsschicht (11A), die den Seitenabschnitt der Innenumfangsfläche (13) einschließlich des Vorsprungs (14) und eines Kontaktabschnitts (15) bildet, und eine Basisaußenumfangsschicht (11B) umfasst, die in der Reifenradialrichtung außen von der Basisinnenumfangsschicht (11A) angeordnet ist,
die Basisinnenumfangsschicht (11A) aus einem ersten Gummimaterial (31) gebildet ist, in das keine Fasern gemischt sind,
die Basisaußenumfangsschicht (11B) aus einem zweiten Gummimaterial (32) gebildet ist, in das eine oder mehrere Fasern gemischt sind,
wobei die Faser einen Durchmesser und eine Länge aufweist, wobei die Faserlänge nicht größer als 10 mm ist,
wobei die Innenumfangsfläche (13) des Vollreifens (1) in der Reifenradialrichtung auf dem Felgensitz (5) angeordnet ist, wenn der Vollreifen auf die Felge (2) aufgezogen ist,
**dadurch gekennzeichnet, dass**
der Faserdurchmesser nicht größer als 100 µm ist, und
wobei der Kontaktabschnitt (15) in der Reifenaxialrichtung relativ zu dem Vorsprung (14) auf der anderen Seite (S2) angeordnet ist und weiter in der Reifenradialrichtung mit der Außenfläche des Sitzabschnitts (8) in Kontakt kommt, wenn er auf die Felge (2) aufgezogen ist.

2. Vollreifen (1) nach Anspruch 1, wobei eine Gummihärte des ersten Gummimaterials (31) 70 bis 95 Grad beträgt, wobei die Gummihärte eine Durometerhärte ist, die bei einer Standardtemperatur von 23°C±2°C durch einen Durometer Typ A gemäß JIS-K6253 gemessen ist.

3. Vollreifen (1) nach Anspruch 1 oder 2, wobei eine maximale Höhe (H1) der Basisinnenumfangsschicht (11A) in der Reifenradialrichtung 3 % bis 20 % einer maximalen Reifenquerschnittshöhe (H2) in der Reifenradialrichtung beträgt.

4. Vollreifen (1) nach einem der Ansprüche 1 bis 3, wobei ein spezifisches Gewicht des zweiten Gummimaterials (32) 1,15 bis 1,30 beträgt.

5. Vollreifen (1) nach einem der Ansprüche 1 bis 4, wobei eine maximale Höhe (H3) der Basisaußenumfangsschicht (11B) in der Reifenradialrichtung 15 % bis 80 % der maximalen Reifenquerschnittshöhe (H2) in der Reifenradialrichtung beträgt.

## Revendications

1. Pneumatique plein (1) comprenant :
une couche de caoutchouc de base (11) configurée pour être montée sur une jante sans anneau latéral (2) qui est structurée pour inclure un siège de jante (5) et une portion de bride (6), dans lequel le siège de jante (5) est structuré pour inclure un évidement (7) et une portion de siège (8) ; et
une couche de caoutchouc de bande de roulement (12) disposée à l'extérieur de la couche de caoutchouc de base (11) dans une direction radiale du pneumatique, dans lequel
une projection (14) est disposée sur une surface circonférentielle intérieure (13), dans la direction radiale du pneumatique, de la couche de caoutchouc de base (11) de manière à se projeter vers l'intérieur dans la direction radiale du pneumatique sur un côté (S1) dans une direction axiale du pneumatique,
la couche de caoutchouc de base (11) inclut une couche circonférentielle intérieure de base (11A) formant la portion latérale de surface circonférentielle intérieure (13) incluant la projection (14) et une portion de contact (15), et une couche circonférentielle extérieure de base (11B) disposée à l'extérieur de la couche circonférentielle intérieure de base (11A) dans la direction radiale du pneumatique,
la couche circonférentielle intérieure de base (11A) est formée d'un premier matériau de caoutchouc (31) dans lequel aucune fibre n'est mélangée,
la couche circonférentielle extérieure de base (11B) est formée d'un second matériau de caoutchouc (32) dans lequel un ou plusieurs fibres sont mélangées,
dans lequel la fibre a un diamètre et une longueur, la longueur de fibre n'étant pas supérieure à 10 mm,
dans lequel la surface circonférentielle intérieure (13), dans la direction radiale du pneumatique, du pneumatique plein (1) est disposée sur le siège de jante (5) quand le pneumatique plein est monté sur la jante (2),
**caractérisé en ce que**
le diamètre de fibre n'est pas supérieur à 100 µm, et
dans lequel la portion de contact (15) est disposée sur l'autre côté (S2) dans la direction axiale du pneumatique relativement à la projection (14) et en outre vient en contact avec la surface extérieure, dans la direction radiale du pneumatique, de la portion de siège (8) quand elle est montée sur la jante (2).

2. Pneumatique plein (1) selon la revendication 1, dans lequel une dureté de caoutchouc du premier matériau de caoutchouc (31) est de 70 à 95 degrés, dans lequel la dureté de caoutchouc est une dureté par duromètre qui est mesurée à une température standard de 23 °C ± 2 °C par un duromètre de type A selon la norme industrielle japonaise JIS-K6253.

3. Pneumatique plein (1) selon la revendication 1 ou 2, dans lequel une hauteur maximum (H1), dans la direction radiale du pneumatique, de la couche circonférentielle intérieure de base (11A) est de 3 % à 20 % d'une hauteur en section transversale du pneumatique maximum (H2) dans la direction radiale du pneumatique.

4. Pneumatique plein (1) selon l'une quelconque des revendications 1 à 3, dans lequel une gravité spécifique du second matériau de caoutchouc (32) est de 1,15 à 1,30.

5. Pneumatique plein (1) selon l'une quelconque des revendications 1 à 4, dans lequel une hauteur maximum (H3), dans la direction radiale du pneumatique, de la couche circonférentielle extérieure de base (11B) est de 15 % à 80 % de la hauteur en section transversale du pneumatique maximum (H2) dans la direction radiale du pneumatique.
